**Europäisches Patentamt**

**European Patent Office**

**Office européen des brevets**

(19)

(11) Veröffentlichungsnummer: **0 052 815**
**B1**

(12) ## EUROPÄISCHE PATENTSCHRIFT

(45) Veröffentlichungstag der Patentschrift:
09.04.86

(21) Anmeldenummer: **81109464.8**

(22) Anmeldetag: **31.10.81**

(51) Int. Cl.⁴: **H 02 G 1/12, H 01 R 43/00**

(54) Verfahren zum Herstellen von einseitig bestückten Einzel- oder Flachbandleitern.

(30) Priorität: **25.11.80 DE 3044319**

(43) Veröffentlichungstag der Anmeldung:
**02.06.82 Patentblatt 82/22**

(45) Bekanntmachung des Hinweises auf die Patenterteilung:
**09.04.86 Patentblatt 86/15**

(84) Benannte Vertragsstaaten:
**AT CH FR LI NL SE**

(56) Entgegenhaltungen:
**GB - A - 1 528 972**
**US - A - 3 353 571**
**US - A - 3 438 126**

(73) Patentinhaber: **STOCKO Metallwarenfabriken Henkels und Sohn GmbH & Co, Kirchhofstrasse 52a, D-5600 Wuppertal 1 (DE)**

(72) Erfinder: **Manigel, Heinz, Fichnerweg 6, D-5600 Wuppertal 11 (DE)**
Erfinder: **Ströter, Hermann, Hilgershöhe 42, D-5600 Wuppertal 11 (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen von an einem Ende bestückten und am anderen Ende abisolierten Teilstücken von Einzel- oder Flachbandleitern in einer Verarbeitungsmaschinen.

Bekannt sind Verfahren, bei denen nach Zuführung von Einzel- oder Flachbandleitern die Leiter über ein Transportsystem in der Verarbeitungsmaschine entweder an beiden Enden durch beidseitig von der Maschine vorgesehene Bestückungseinrichtungen mit Steckern oder Steckergehäusen bestückt fertig aus der Maschine kommen oder die Leiter werden nur an einem Ende bestückt und am anderen Ende in einer Trenn- und Abisoliereinrichtung getrennt und abisoliert.

Nachteilig ist, daß im jeweiligen Bedarfsfall, also entweder beidseitige Bestückung der Leiter oder aber nur einseitige Bestückung, während die andere Seite abisoliert werden soll, die Maschine auf der Seite, wo bestückt oder abisoliert werden soll, dann entweder zusätzlich eine Bestückungs- oder Trenn- und Abisoliereinrichtung erhält oder jeweils entsprechend der Anforderung umgerüstet wird. Weiterhin ist es nachteilig, daß der Ausstoß an doppelseitig bestückten oder an an einem Ende bestückter und am anderen Ende abisolierter Leiter immer nur der Anzahl der der Maschine zur Verarbeitung zugeführten Leiter entspricht.

Um zu einer Leistungssteigerung zu kommen für den Bedarfsfall, daß Leiter sowohl bestückt wie abisoliert sein sollen, hat sich die Erfindung die Aufgabe gestellt, bei einer nur für doppelseitige Bestückung von Leitern ausgelegten Verarbeitungsmaschine eine Trenn- und Abisoliereinrichtung zusätzlich so in den Verfahrensablauf der Maschine einzubringen, daß die Anzahl der an einem Ende bestückten und am anderen Ende abisolierten Leiter verdoppelt wird.

Die Lösung der Aufgabe der Erfindung erfolgt gemäss dem kennzeichnenden Teiles des Anspruchs 1.

In vorteilhafter Ausgestaltung der Erfindung ist vorgesehen, daß zwei oder mehr Trenn- und Abisoliereinrichtungen nebeneinander, jeweils in gleichem oder ungleichem Abstand von den Längsachsen in Längsachsrichtung der Maschine verwendet werden.

Das erfindungsgemäße Verfahren wird nachfolgend anhand der Zeichnungen erläutert. Es zeigt in schematischer Darstellung:
Fig. 1 Verarbeitungsmaschine in Ansicht,
Fig. 2 Verarbeitungsmaschine in Draufsicht,
Fig. 3 Trenn- und Abisoliereinrichtung in Offenstellung,
Fig. 4 Trenn- und Abisoliereinrichtung in Funktionsstellung, Leiter getrennt, Isolation eingeschnitten,
Fig. 5 Trenn- und Abisoliereinrichtung nach dem Verfahren der Spanneinheiten, Teilstücke der Leiter abisoliert,
Fig. 6 Doppelte Anzahl Teilstücke der Leiter, gleich lang,
Fig. 7 Doppelte Anzahl Teilstücke der Leiter, ungleich lang,
Fig. 8 Doppelte Anzahl Teilstücke der Leiter, gleich und ungleich lang.

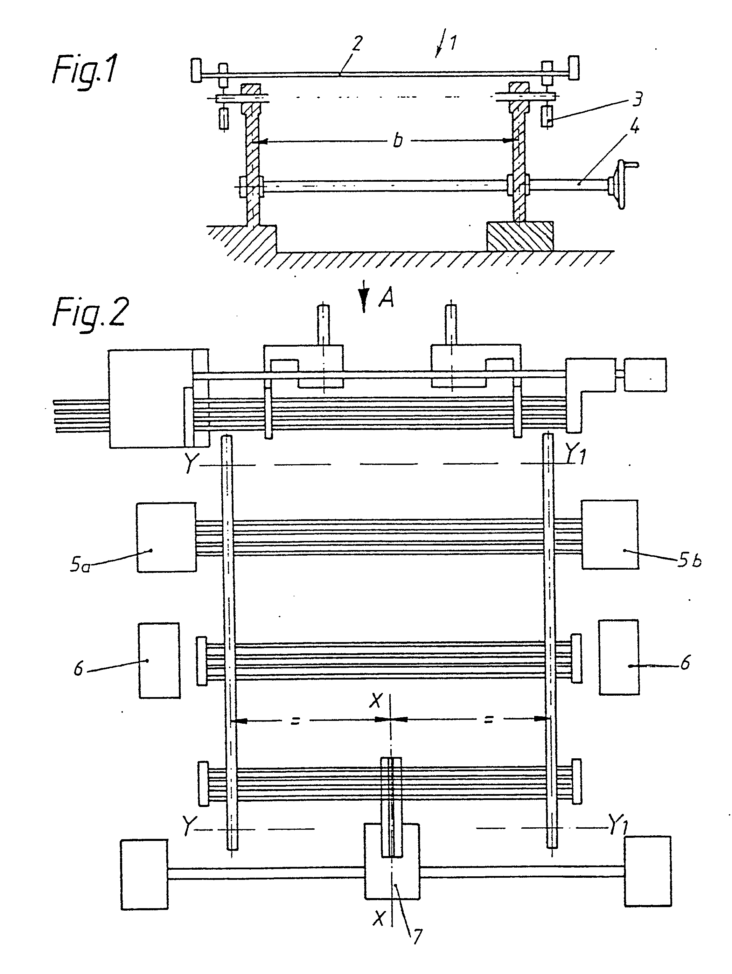

Die schematische Darstellung der Verarbeitungsmaschine 1 nach Fig. 1 zeigt in Ansicht einen eingezogenen Strang von Einzel- oder Flachbandleitern 2, ein Transportsystem 3 und eine Längenverstellvorrichtung 4, über die die Maschinenbreite b, je nach Bedarf der zu erzeugenden Längen der Leiter 2, eingestellt wird.

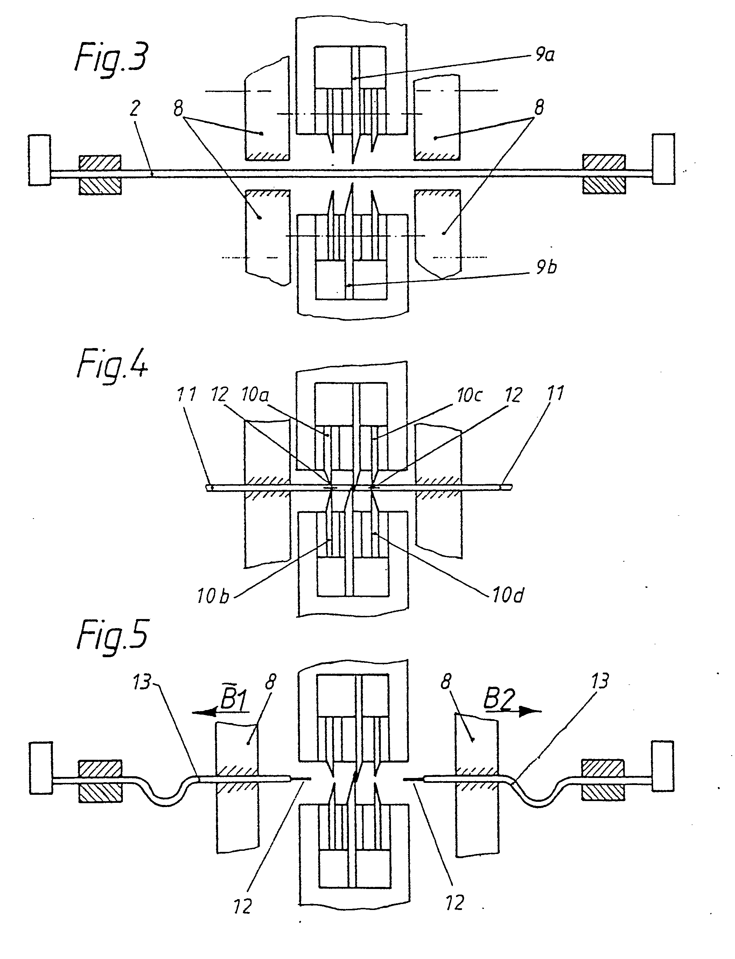

Über ein Transportsystem 3 werden, wie aus Fig. 2 ersichtlich, die Leiter 2 in Vorschubrichtung A zu den beidseitig vorgesehenen Bestückungseinrichtungen 5a, 5b verfahren und weiter zu einer dann evtl. vorgesehenen Prüfeinrichtung 6, um danach zu einer in Längsachsrichtung $X$—$X$, gleichmäßig von den Längsachsen $Y$—$Y$, $Y_1$—$Y_1$ des Transportsystems 3 beabstandet, mittig vorgesehenen Trenn- und Abisoliereinrichtung 7 verfahren zu werden, die im Schema in Offenstellung mit dazwischenliegenden Leitern 2 in Fig. 3 dargestellt ist. Beidseitig der Trenn- und Abisoliereinrichtung 7 sind Spanneinheiten 8 vorgesehen, mit denen in Funktionsstellung, wie aus Fig. 4 ersichtlich, die Leiter festgehalten werden, während gleichzeitig die Trennmesser 9a, 9b die Leiter durchtrennen und die beidseitig davon vorgesehenen Abisoliermesser 10a, 10b und 10c, 10d in die Isolation 11 der Leiter 2 bis auf den Leiterkern 12 einschneiden. Dann werden die Spanneinheiten 8 gleichzeitig in Richtung $B_1$ nach links und in Richtung $B_2$ nach rechts verfahren, wobei die Isolation 11 der gleich lang getrennten Teilstücke 13 der Leiter 2 von den Leiterkernen 12 abgestreift wird, wie dies der Fig. 5 zu entnehmen ist.

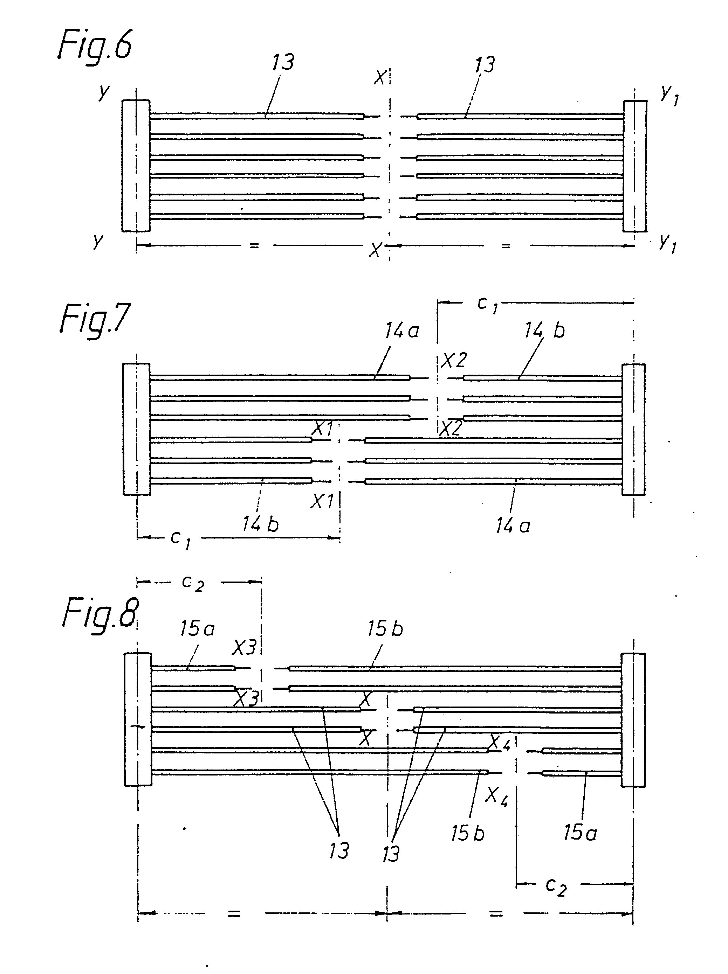

Fig. 6 zeigt den Zustand der mittig in Längsrichtung $X$-$X$ bei gleichem Abstand von den Längsachsen $Y$—$Y$ und $Y_1$—$Y_1$ getrennten und abisolierten gleich langen Teilstücke 13 der Leiter 2.

Fig. 7 zeigt den Zustand der in den Längsachsrichtungen $X_1$—$X_1$, $X_2$—$X_2$, von den Längsachsen $Y$—$Y$ und $Y_1$—$Y_1$ des Transportsystems 3 in gleichem Abstand $c_1$ befindlichen getrennten und abisolierten ungleich langen Teilstücke 14a, 14b der Leiter 2.

Schließlich zeigt Fig. 8 den Zustand sowohl mittig in Längsachsrichtung $X$—$X$ bei gleichem Abstand von den Längsachsen $Y_1$—$Y_1$ getrennten und abisolierten Teilstücke 13 der Leiter 2 wie den der in den Längsachsrichtungen $X_3$—$X_3$, $X_4$—$X_4$ von den Längsachsrichtungen $Y$—$Y$ und $Y_1$—$Y_1$ jeweils im Abstand $c_2$ befindlichen getrennten und abisolierten ungleich langen Teilstücke 15a, 15b der Leiter 2.

## Patentansprüche

1. Verfahren zum Herstellen von an einem Ende mit Steckern oder Steckergehäusen bestückten und am anderen Ende abisolierten Teilstücken (13, 14, 15) von Einzel- oder Flachband leitern in einer Verarbeitungsmaschine (1), dadurch gekennzeichnet, daß

a) zuerst die Einzel- oder Flachbandleiter (2) in einer Bestückungsstation (5) an ihren beiden Enden mit Kontaktstücken, Steckern oder dergleichen bestückt,

b) die so bestückten Leiter (2) in einer auf die Bestückungsstation (5) in der Verarbeitungsmaschine (1) folgenden Trenn- und Abisoliereinrichtung (7), die gleich oder ungleich weit beabstandet von den Längsachsen (Y—Y, Y$_1$—Y$_1$) in Längsrichtung (X—X) der Verarbeitungsmaschine (1) angeordnet ist, in gleich oder ungleich lange Teilstücke (13, 14, 15) auseinandergeschnitten und

c) die so erhaltenen freien Leiterenden abisoliert werden.

2. Verfahren nach Anspruch 1, dadurch gekennzeichnet, daß zwei nebeneinander in vorgegebenem Abstand (C$_1$) von den Längsachsen (Y—Y, Y$_1$—Y$_1$) in Längsachsrichtung (X$_1$—X$_1$, X$_2$—X$_2$) der Verarbeitungsmaschine (1) angeordnete Trenn- und Abisoliereinrichtungen (7) verwendet werden.

3. Verfahren nach Anspruch 1, dadurch gekennzeichnet, daß meher als zwei nebeneinander im gleichen oder ungleichen Abstand (C$_2$) von den Längsachsen (Y—Y, Y$_1$—Y$_1$) in den Längsachsrichtungen (X—X, X$_3$—X$_3$, X$_4$—X$_4$) der Verarbeitungsmaschine (1) angeordnete Trenn- und Abisoliereinrichtungen (7) verwendet werden.

## Revendications

1. Procédé de fabrication dans une machine de fabrication, d'éléments (13, 14, 15) de conducteurs uniques ou en bande munis à une extrémité de fiches mâles ou femelles et dénudés à l'autre extrémité, caractérisé en ce que:

a) on munit tout d'abord les conducteurs uniques ou en bande à leurs deux extrémités de plots de contact, fiches mâles ou équivalents à un poste d'équipement (5);

b) on sépare par découpe en éléments de longueur égale ou inégale (13, 14, 15) les conducteurs (2) ainsi équipés dans une installation (7) de séparation et de dénudage qui suit le poste d'équipement (5) dans la machine de fabrication (1), ladite installation (7) étant disposée à distance égale ou inégale des axes longitudinaux (Y—Y, Y$_1$—Y$_1$) dans la direction longitudinale (X—X) de la machine de fabrication (1) et,

c) on dénude les extrémités de conducteurs libres obtenues.

2. Procédé selon la revendication 1, caractérisé en ce qu'on utilise deux installations (7) de séparation et de dénudage disposées adjacentes à distance (C$_1$) donnée des axes longitudinaux (Y—Y, Y$_1$—Y$_1$) dans la direction longitudinale (X$_1$—X$_1$, X$_2$—X$_2$) dans la machine de fabrication (1).

3. Procédé selon la revendication 1, caractérisé en ce qu'on utilise plus de deux installations (7) de séparation et de dénudage disposées adjacentes à distance égale ou inégale (C$_2$) des axes longitudinaux (Y—Y, Y$_1$—Y$_1$) dans la direction longitudinale (X—X, X$_3$—X$_3$, X$_4$—X$_4$) de la machine de fabrication (1).

## Claims

1. Method of manufacturing part elements (13, 14, 15) of single or flat strip conductors, fitted at one end with plugs or plug housings and insulated at the other end, in a processing machine characterised in that

a) the single or flat strip conductors (2) are fitted at both their ends with contact elements, plugs or the like in a fitting station (5);

b) the conductors (2) thus fitted are cut apart into part elements (13, 14, 15) of equal or unequal length, in a separating and insulating device (7) following the fitting station (5) in the processing machine (1), which device is mounted at an equal or unequal distance from the longitudinal axes (Y—Y, Y$_1$—Y$_1$) in the longitudinal direction (X—X) of the processing machine and

c) the free conductor ends thus obtained are insulated.

2. A method according to claim 1, characterised in that two separating and insulating devices (7) disposed alongside each other at a predetermined distance (C$_1$) from the longitudinal axes (Y—Y, Y$_1$—Y$_1$) in the longitudinal axis direction (X$_1$—X$_1$, X$_2$—X$_2$) of the processing machine (1) are used.

3. A method according to claim 1, characterised in that more than two separating and insulating devices (7) disposed alongside one another at an equal or unequal distance (C$_2$) from the longitudinal axis (Y—Y, Y$_1$—Y$_1$) in the longitudinal axis directions (X—X, X$_3$—X$_3$, X$_4$—X$_4$) of the processing machine (1) are used.

Fig.1

Fig.2

Fig.3

Fig.4

Fig.5

**Fig.6**

**Fig.7**

**Fig.8**